# EUROPÄISCHE PATENTSCHRIFT

(11) **EP 0 825 414 B1**
(45) Veröffentlichungstag und Bekanntmachung des Hinweises auf die Patenterteilung: **11.09.2002**
(21) Anmeldenummer: 97107989.2
(22) Anmeldetag: 16.05.1997
(51) Int. Cl.: G01B 7/30, F16D 66/02, G01D 5/04, F16D 1/12

(54) **Drehwinkelsensor zur Drehwinkelanzeige mehrerer Umdrehungen einer Welle**
Angle of rotation sensor for indicating the angle of rotation of a shaft over several revolutions
Détecteur d'angle de rotation pour indiquer l'angle de rotation d'un axe sur plusieurs tours

(30) Priorität: 14.08.1996 DE 19632766
(43) Veröffentlichungstag der Anmeldung: 25.02.1998
(73) Patentinhaber: Preh-Werke GmbH & Co. KG, 97616 Bad Neustadt a.d. Saale (DE)
(72) Erfinder: Schmitt, Michael, Dr.,, 97702 Münnerstadt (DE); Reuss, Oswald, 97656 Unterelsbach (DE)
(74) Vertreter: Dietrich, Barbara

(56) Entgegenhaltungen:
- EP-A- 0 389 669
- DE-A- 4 125 884
- DE-A- 4 129 232
- DE-A- 4 131 034
- DE-U- 9 013 001

## Beschreibung

Die Erfindung betrifft einen Drehwinkelsensor zur Drehwinkelanzeige mehrerer Umdrehungen einer Welle nach dem Oberbegriff des Anspruchs 1, wie er beispielsweise für die Verschleißanzeige bei Bremsen für Straßenfahrzeuge zur Anwendung kommt.

Im Zuge gestiegener Sicherheitsanforderungen im Straßenverkehr in Verbindung mit zunehmendem Einsatz von Elektronik wird bei sicherheitsrelevanten Aggregaten, wie z. B. Radbremsen, eine Funktionsüberwachung mittels Sensoren immer häufiger zur unverzichtbaren Pflichtforderung erhoben.

Die Wirkungsweise der Bremse ist dadurch gekennzeichnet, daß die Betätigungskraft über einen Hebel eingeleitet und über eine Gewindespindel mit Druckstück auf den Bremsbelag übertragen wird. Ein automatischer Verschleißnachsteller, der in eine Gewindespindel integriert ist, gleicht den entstehenden Belag- und Scheibenverschleiß durch Herausdrehen der Gewindespindel aus.
Die Gewindespindelumdrehung wird zur indirekten Verschleißerfassung durch den Drehwinkelsensor herangezogen.

Aufgabe des Sensors ist es, den Belag- und Scheibenverschleiß über die gesamte vorgesehene Verschleißentwicklung kontinuierlich zu erfassen, wobei in jedem denkbaren Betriebs- und Wartungszustand einer undemontierten Bremse zwischen Verschleiß- und Signalwert des Sensors eine eindeutige Zuordnung bestehen bleiben muß.

Hierbei vollzieht die Gewindespindel über die Lebensdauerzeit bzw. bis zum Bremsbelagverschleiß etwa 10 Umdrehungen, die ein Untersetzungsgetriebe erfordern, da üblicherweise ein Drehpotentiometer maximal eine volle Umdrehung anzeigen kann. Um eine genaue Anzeige des Bremsbelagverschleißes zu erreichen, sind demnach eine äußerst genaue Ausrichtung der Welle des Drehwinkelsensors zur Gewindespindel notwendig und zum anderen eine genaue Ausrichtung des Drehwinkelsensorgehäuses selbst zur Gewindespindel oder eines diese lagernden Bauteils, da eine Fehlausrichtung mit etwa 10-facher Verstärkung des Fehlers in den angezeigten Widerstandswert eingeht.

Aus der EP-A-0 389 669 und der DE-U-9 013 001 sind Kupplungen zweier Wellen bekannt, bei denen die Enden der jeweiligen Wellen mit ineinander greifenden Verzahnungen versehen sind.

Hiervon ausgehend liegt der Erfindung daher die Aufgabe zugrunde, Maßnahmen aufzufinden, mit denen eine äußerst genaue Ausrichtung der Wellen zueinander und des Drehwinkelgehäuses zum Bauteil erreichbar wird, darüber hinaus soll eine vereinfachte Wartung möglich werden, dadurch, daß das Bauteil und der Drehwinkelsensor ohne gegenseitige Verstellung demontiert und montiert werden können.

Diese Aufgabe ist durch die im Kennzeichen des Patentanspruch 1 angegebenen Merkmale gelöst. Vorteilhafte Weiterbildungen sind in den abhängigen Ansprüchen angegeben.

Ein Ausführungsbeispiel der Erfindung ist in der Zeichnung dargestellt und wird nachfolgend beschrieben.

Es zeigt:
Fig. 1 und 2
   Ansichten einer Drehwinkelsensoranordnung,
Fig. 3
   eine schematische Darstellung eines kardanischen Schlittens innerhalb einer Gehäuseführung.

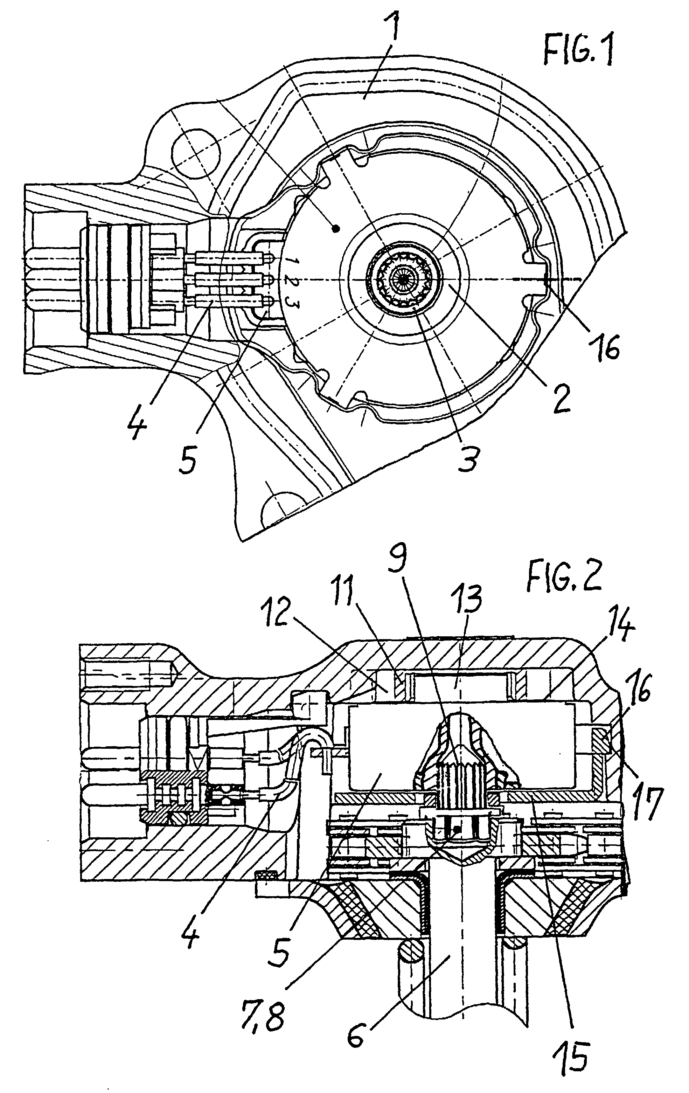

Figur 1 zeigt eine Ansicht eines geöffneten Bauteildeckels 1, in dem ein Drehwinkelsensor 2 zur Drehwinkelanzeige mehrerer Umdrehungen einer Drehwinkelsensorwelle 3 mittels eines Untersetzungsgetriebes und einer Potentiometereinheit angeordnet ist, wobei der Stellwinkel der Potentiometereinheit kleiner als eine volle Umdrehung ist und die Potentiometereinheit über flexible Anschlußleitungen 4 zwischen einem Drehwinkelsensorgehäuse 5 und dem Bauteildeckel 1 verschaltet ist, in dem ein Anschlußsteckerschacht besteht.

Erfindungsgemäß ist nun vorgesehen, daß das Drehwinkelsensorgehäuse 5 innerhalb des Bauteildeckels 1 translatorisch beweglich gehalten ist, daß die Drehwinkelsensorwelle 3 und eine Bauteilwelle 6, wie in Fig. 2 dargestellt ist, über ein Kupplungsstück 7 gekoppelt sind, das auf jeder Wellenseite 8, 9 Flachkantabschnitte aufweist, wobei die Wellenseite 9 eine Vielzahl der Flachkantabschnitteanzahl der anderen Wellenseite 8 aufweist und die Wellenabschnitte der Drehwinkelsensorwelle 3 und der Bauteilwelle 6 entsprechende Komplementärausnehmungen aufweisen.

Hierdurch wird erreicht, daß eine äußerst genaue Zuordnung der Wellen 3, 6 des Drehwinkelsensors 2 und des Bauteils erreicht wird, wobei vorteilhafterweise das Kupplungsstück 7 auf der Wellenseite als Sechskantende und auf der anderen Wellenseite als Achtzehnkeilende ausgeführt sind, wie Fig. 2 zeigt.

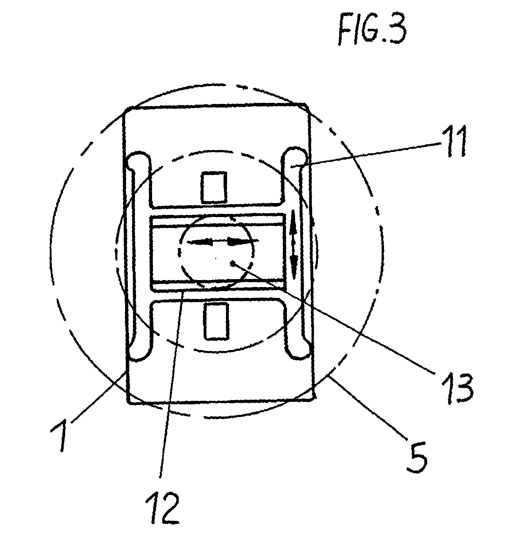

Hierdurch läßt sich die übliche 60°-Aufteilung des Sechskantendes in eine 20°-Aufteilung verkleinern. Die translatorische Beweglichkeit (Pfeile) des Drehwinkelsensorgehäuses 5, strichpunktiert dargestellt, läßt sich durch einen Kardanschlitten 11 erreichen, der in dem Bauteildeckel 1 geradlinig geführt ist und eine quer dazu angeordnete Schlittenbahn 12 für einen oder mehrere Gehäuseführungszapfen 13 aufweist, wie aus Fig. 3 ersichtlich ist.

Es ist vorgesehen (Fig. 2), daß das Drehwinkelsensorgehäuse 5 in Axialrichtung der Wellen 3, 6 durch eine Gehäuseanlagewand 14 und einen in das Gehäuse 5 eingesetzten Haltekorb 15 gehalten ist. Hierbei können Haltearme 16 des in Kunststoff bestehenden Haltekorbes 15 in Gehäusevertiefungen 17 einklippsen.

Es hat sich als ausreichend gezeigt, wenn die translatorische Beweglichkeit jeder Bewegungsrichtung etwa 1,2 mm beträgt. Die Potentiometereinheit ist durchdrehbar ausgeführt, um eine Zerstörung bei Fehleinstellung/Montage zu verhindern.

Hierfür ist insbesondere auch die Maßnahme geeignet, daß das Untersetzungsgetriebe von einem Planetengetriebe gebildet ist, das mit einer Selbsthemmung gegenüber Verstellung behaftet ist, so daß bei Montage, Demontage und anschließender Montage eine unbeabsichtigte Verstellung der Drehwinkelsensorwelle gegenüber der Bautellwelle ausgeschlossen ist und damit der Zuordnung Verschleiß- und Signalwert.

Mit der Erfindung lassen sich in Verbindung mit einer Fahrzeugbremseinrichtung folgende Operationen durchführen:
- kontinuierliche Verschleißüberwachung mit Verschleißendanzeige.
- Überwachung der Bremsenfunktion durch Plausibilitätsvergleich verschiedener Bremsen,
- Servicevereinfachung
- Verschleißharmonisierung zwischen mehreren Achsen.

## Patentansprüche

1. Drehwinkelsensor (2) zur Drehwinkelanzeige mehrerer Umdrehungen einer Welle (6) mittels eines Untersetzungsgetriebes und einer Potentiometereinheit, deren Stellwinkel kleiner als eine volle Umdrehung ist und die über flexible Anschlußleitungen zwischen einem Drehwinkelsensorgehäuse (5) und einem Bauteildeckel (1) verschaltet ist, **dadurch gekennzeichnet, daß** das Drehwinkelsensorgehäuse (5) innerhalb des Bauteildeckels (1) translatorisch beweglich gehalten ist, daß die Drehwinkelsensorwelle (3) und eine Bauteilwelle (6) über ein Kupplungsstück (7) gekoppelt sind, das auf jeder Wellenseite (8, 9) Flachkantabschnitte aufweist, wobei eine Wellenseite (9) eine Vielzahl der Flachkantabschnitteanzahl der anderen Wellenseite (8) aufweist und die Drehwinkelsensorwelle (3) und die Bauteilwelle (6) entsprechende Komplementärausnehmungen aufweisen.

2. Drehwinkelsensor nach Anspruch 1, **dadurch gekennzeichnet, daß** das Kupplungsstück (7) auf einer Seite (8) als Sechskantende und auf der anderen Seite (9) als Achtzehnkeilende ausgeführt ist.

3. Drehwinkelsensor nach Anspruch 1 oder 2, **dadurch gekennzeichnet, daß** die translatorische Beweglichkeit durch einen Kardanschlitten (11) erreicht wird, der in dem Gehäuse (5) geradlinig geführt ist und eine quer dazu angeordnete Schlittenbahn (12) für einen oder mehrere Gehäuseführungszapfen (13) aufweist.

4. Drehwinkelsensor nach einem der vorstehenden Ansprüche, **dadurch gekennzeichnet, daß** das Drehwinkelsensorgehäuse (5) in Axialrichtung der Wellen (3, 6) durch eine Gehäuseanlagewand (14) und einen in das Gehäuse (5) eingesetzten Haltekorb (15) gehalten ist.

5. Drehwinkelsensor nach einem der vorstehenden Ansprüche, **dadurch gekennzeichnet. daß** die translatorische Beweglichkeit jeder Bewegungsrichtung etwa 1,2 mm beträgt.

6. Drehwinkelsensor nach einem der vorstehenden Ansprüche, **dadurch gekennzeichnet, daß** die Potentiometereinheit durchdrehbar ist.

7. Drehwinkelsensor nach einem der vorstehenden Ansprüche, **dadurch gekennzeichnet, daß** das Untersetzungsgetriebe von einem Planetengetriebe gebildet ist, das mit einer Selbsthemmung gegenüber Verstellung behaftet ist.

## Claims

1. Angular sensor (2) for angular indication of a plurality of revolutions of a shaft (6) by means of a reduction gear and a potentiometer unit whose set angle is less than a complete revolution and that is connected via flexible connection lines between an angular sensor casing (5) and a component lid (1), **characterized in that** the angular sensor casing (5) is held so as to move in a translatory manner within the component lid (1) and **in that** the angular sensor shaft (3) and a component shaft (6) are coupled via a coupling piece (7) that has flat edge sections on each shaft side (8, 9), wherein one shaft side (9) has a multiplicity of the flat edge section number of the other shaft side (8) and the angular sensor shaft (3) and the component shaft (6) have corresponding matching recesses.

2. Angular sensor according to Claim 1, **characterized in that** the coupling piece (7) is designed on one side (8) as a hexagonal end and on the other side (9) as an eighteen-wedge end.

3. Angular sensor according to Claim 1 or 2, **characterized in that** the translatory mobility is achieved by a cardan carriage (11) that is guided linearly in the casing (5) and has a carriage track (12), disposed transversely thereto, for one or more casing guide pins (13).

4. Angular sensor according to one of the preceding claims, **characterized in that** the angular sensor casing (5) is held in the axial direction of the shaft (3, 6) by a casing contact wall (14) and a holding basket (15) inserted into the casing (5).

5. Angular sensor according to one of the preceding claims, **characterized in that** the translatory movement of each movement direction is about 1.2 mm.

6. Angular sensor according to one of the preceding claims, **characterized in that** the potentiometer unit is capable of a complete revolution.

7. Angular sensor according to one of the preceding claims **characterized in that** the reduction gear is formed by a planetary gear that is subject to a self-locking with respect to displacement.

## Revendications

1. Détecteur d'angle de rotation (2) pour indiquer l'angle de rotation d'un arbre (6) sur plusieurs tours à l'aide d'un démultiplicateur et d'un potentiomètre dont l'angle de réglage est inférieur à un tour complet et qui est câblé, au moyen de raccordements souples, entre un boîtier de détecteur d'angle de rotation (5) et un couvercle d'élément (1), **caractérisé en ce que** le boîtier de détecteur d'angle de rotation (5) est maintenu à l'intérieur du couvercle de l'élément (1) de manière à se mouvoir en translation, **en ce que** l'arbre du détecteur d'angle de rotation (3) et un arbre de l'élément (6) sont accouplés par une pièce d'accouplement (7) qui comporte des segments à arêtes aplaties de chaque côté de l'arbre (8, 9), moyennant quoi un côté de l'arbre (9) comporte une multiplicité de segments à arêtes aplaties de l'autre côté de l'arbre (8) et les segments de l'arbre de l'arbre du détecteur d'angle de rotation (3) et de l'arbre de l'élément (6) comportent des encoches complémentaires correspondantes.

2. Détecteur d'angle de rotation selon la revendication 1, **caractérisé en ce que** la pièce d'accouplement (7) est construite sur un côté (8) une extrémité à six pans et sur l'autre côté (9) comme une extrémité à dix-huit clavettes.

3. Détecteur d'angle de rotation selon la revendication 1 ou 2, **caractérisé en ce que** le mouvement de translation est obtenu par un chariot à cardan (11) qui est guidé en ligne droite dans le boîtier (5) et qui comporte une glissière de chariot (12) disposée transversalement à ce dernier pour un ou plusieurs tourillons de guidage de boîtier (13).

4. Détecteur d'angle de rotation selon l'une des revendications précédentes, **caractérisé en ce que** le boîtier du détecteur d'angle de rotation (5) dans le sens axial des arbres (3,6) est maintenu à l'aide d'une paroi de contact de boîtier (14) et d'un panier de retenue (15) placé dans le boîtier (5).

5. Détecteur d'angle de rotation selon l'une des revendications précédentes, **caractérisé en ce que** le mouvement de translation de chaque sens de déplacement est de 1,2 mm.

6. Détecteur d'angle de rotation selon l'une des revendications précédentes, **caractérisé en ce que** le potentiomètre peut être débordé.

7. Détecteur d'angle de rotation selon l'une des revendications précédentes, **caractérisé en ce que** le démultiplicateur est constitué d'un engrenage planétaire qui comporte un blocage automatique en cas de déplacement.
